# EUROPÄISCHE PATENTSCHRIFT

(11) **EP 1 747 246 B1**
(45) Veröffentlichungstag und Bekanntmachung des Hinweises auf die Patenterteilung: **17.10.2007**
(21) Anmeldenummer: 05739621.0
(22) Anmeldetag: 21.04.2005
(51) Int. Cl.: C08J 3/12, C08L 1/00, B05C 1/12, B02C 18/00

(54) **VERFAHREN UND VORRICHTUNG ZUM MAHLEN VON CELLULOSE**
METHOD AND DEVICE FOR GRINDING CELLULOSE
PROCEDE ET DISPOSITIF POUR MOUDRE DE LA CELLULOSE

(30) Priorität: 28.04.2004 DE 102004020686
(43) Veröffentlichungstag der Anmeldung: 31.01.2007
(73) Patentinhaber: SE Tylose GmbH & Co.KG, 65203 Wiesbaden (DE)
(72) Erfinder: PERPLIES, Eberhard, 65396 Walluf (DE)
(74) Vertreter: Zounek, Nikolai
(86) Internationale Anmeldenummer: PCT/EP2005/004269
(87) Internationale Veröffentlichungsnummer: WO 2005/105900

(56) Entgegenhaltungen:
- EP-A- 0 049 815
- EP-A- 1 162 003
- DE-A1- 1 411 892
- DE-B1- 2 458 998

## Beschreibung

Die Erfindung betrifft ein Verfahren zum Mahlen von Cellulose, bei dem ein Cellulose-Rohmaterial vor dem Vermahlen gleichmäßig mit einer vorgegebenen Flüssigkeitsmenge befeuchtet wird und eine Vorrichtung zur Durchführung des Verfahrens.

Für nahezu alle industriellen Verwendungen müssen Cellulose und Celluloseether in Form von Pulver bereitgestellt werden. Hierbei ist es je nach Einsatzgebiet erforderlich, die Korngrößenverteilung, den Trockengehalt und insbesondere die Viskosität der Cellulose- und Celluloseetherpulver einzustellen.

Es ist bekannt, Cellulose-Rohstoff, der z.B. als Bahnmaterial vorliegt, in Schneidmühlen zu einem weitgehend aus Einzelfasern bestehenden rieselfähigen Cellulosegrobpulver, dessen Faserlängenverteilung im wesentlichen größer als 300 µm ist, zu mahlen. Das Cellulosegrobpulver wird in chemischen Verfahren in Celluloseether umgesetzt. Die erhaltenen Celluloseether können gegebenenfalls in Kugel- oder Schwingmühlen zu Feinpulvern mit Komgrößenverteilungen unter 100 µm vermahlen werden. Für andere Einsatzgebiete ist es möglich, das Cellulosegrobpulver in Kugel- oder Schwingmühlen direkt zu Cellulosefeinpulver zu vennahlen.

Bei der Mahlung von Cellulose bzw. Celluloseethern wird die mechanische Mahlenergie durch Reibung weitgehend in Wärmeenergie umgewandelt, was zu Temperaturerhöhung an der Mühle und der Siebeinheit führt. Durch Luftkühlung wird ein großer Teil der Energie abgeführt. Es lässt sich aber nicht vermeiden, dass sich die Mühlen während des Mahlvorgangs auf Temperaturen über 130 °C erwärmen. Durch die mechanische Einwirkung bei erhöhter Temperatur werden die Cellulose-Polymermoleküle teilweise abgebaut bzw. verkürzt, d.h. es kommt zu einer Reduzierung des Polymerisationsgrades DP.

Die Qualität von Cellulose und Celluloseethern wird durch ihren Viskositätsgrad charakterisiert. Die Viskosität ist im wesentlichen bestimmt durch den Polymerisationsgrad DP. Für die Messung der Viskosität stehen mehrere standardisierte Verfahren zur Verfügung, die voneinander abweichende Werte liefern. Für die in den erfindungsgemäßen Verfahren verwendete Cellulose wird die Viskosität bzw. die Grenzviskositätszahl GVZ nach dem Cuen-Verfahren gemäß DIN 54270 gemessen. Hierzu wird die Cellulose mit verschiedenen Konzentrationsgraden in Kupfer-Ethylendiamin gelöst, die jeweiligen Viskositäten gemessen und auf Konzentration Null extrapoliert.

Grundsätzlich besteht großes Interesse an Mahlverfahren - insbesondere für die Grobmahlung von Cellulose - bei denen der Polymerisationsgrad DP in möglichst geringem Maße reduziert wird.

Die DE 24 58 998 (= US-A 4,076 935) lehrt ein Verfahren zur schonenden Feinmahlung von Cellulose oder deren Etherderivaten in einer Schwingmühle in Gegenwart von 5 bis 14 Gew.-% im Ausgangsmaterial befindlichem oder von außen zugeführtem Wasser zu einem Pulver mit Korngrößenverteilung unter 100 µm und einer Restfeuchte von 2 bis 10 Gew.-%.

In der DE-A 196 41 781 ist ein Verfahren zum gleichzeitigen Mahlen und Trocknen eines feuchten, Celluloseether enthaltenden Mahlgutes beschrieben, bei dem ein Gasstrom das Mahlgut in den Mahl- und Reibungsraum einer Mühle befördert, wobei die Anfangsfeuchte des Celluloseethers 20 bis 70 Gew.-% und die Restfeuchte nach dem Mahl- und Trockenvorgang 1 bis 10 Gew.-% beträgt.

Aus der DE-C 952 264 ist ein dreistufiges Verfahren zur Überführung feuchter, faseriger Methylcellulosen in Pulver von hoher Lösegeschwindigkeit bekannt. Hier wird das 50 bis 70 Gew.-% Wasser enthaltende Produkt zuerst zu einer plastischen Masse homogenisiert und auf 10 bis 20 °C gekühlt, wobei man sich einer gekühlten Schneckenpresse bedient; anschließend wird mit einer Hammerkorbmühle gemahlen und in einem Umlufttrockner getrocknet.

Die DE-C 24 10 789 (= US-A 4,044,198) beschreibt ein Verfahren zur Herstellung von Cellulosederivaten, vorzugsweise Celluloseethern, mit hohem Feinanteil. Hier werden die feuchten Cellulosederivate mittels flüssigem Stickstoff versprödet und dann einer Mahlung unterworfen.

In der EP-A 0049 815 (= US-A 4,415,124) wird ein zweistufiges Verfahren zur Herstellung von Miltropulvern aus Celluloseethern oder Cellulose beschrieben, wobei man die Produkte, die eine feinfaserige oder wollige Struktur aufweisen, zuerst in eine versprödete, verfestigte Form überführt und das so vorbehandelte Material einer Mahlung unterwirft, bis eine Korngrößenverteilung von mindestens 90 % unter 125 µm erreicht wird. In der Versprödungsstufe werden Schwing- oder Kugelmühlen, vorzugsweise in gekühlter Ausführung, oder Pelletpressen und in der Mahlstufe Stift- oder Pralltellermühlen eingesetzt.

DE-A 14 54 824 beschreibt ein Verfahren zur Herstellung von Granulaten oder Pulvern aus faserigen, trockenen Celluloseethern durch Friktionierung zwischen zwei Walzen, die mit unterschiedlichen Drehzahlen laufen und nachfolgender Mahlung.

DE-A 30 32 778 nennt ein zweistufiges Verfahren zur kontinuierlichen Homogenisierung von feuchten Celluloseethern, indem man den feuchten Celluloseether einer Schneid-, Prall- und Scherwirkung, erzeugt durch umlaufende Drehkörper mit verschiedenen Mantelprofilen, unterwirft, gegebenenfalls gleichzeitiger Pelletisierung der zerkleinerten Celluloseether unter Zugabe von Wasser und anschließender Trocknung der erhaltenen Pellets.

Die bekannten Verfahren nach dem Stand der Technik sind zum größten Teil mehrstufig mit Vortrocknung oder Vorversprödung bzw. -verdichtung und bedingen einen hohen apparativen Aufbau, z.B. durch intensive Kühlung. Weiterhin ist bei allen Verfahren die thermisch-mechanische Beanspruchung der Makromoleküle, besonders bei der Verarbeitung von hochviskosen, hochsubstituierten Produkten, immer noch so hoch, dass bei der Mahlung die Makromoleküle durch Kettenverkleinerung abgebaut werden, was sich insbesondere durch den mehr oder minder hohen Viskositätsabbau gegenüber den Ausgangsprodukten bemerkbar macht. Außerdem verhornen die Oberflächen der behandelten Produkte durch die Vorversprödungs- bzw. Vortrocknungsschritte, was sich bezüglich der geforderten schnellen und vollständigen Löseeigenschaften nachteilig bemerkbar macht.

Aufgabe der Erfindung ist es, bekannte Verfahren und Vorrichtungen zur Grobmahlung von Cellulose in Schneidmühlen so weiterzuentwickeln, dass die Viskosität (= DP) des gemahlenen Cellulosepulvers gegenüber der Viskosität (= DP) des Ausgangsmaterials nur in geringem Maße reduziert wird, und die Temperatur der Mahlvorrichtung während des Mahlvorgangs erniedrigt wird.

Diese Aufgabe wird erfindungsgemäß in der Weise gelöst, dass das Cellulose-Rohmaterial als Cellulosebahn einem Mahlwerk kontinuierlich und mit regelbarer konstanter Geschwindigkeit zugeführt wird und dass die Flüssigkeitsmenge so bemessen ist, dass der Trockengehalt des befeuchteten Cellulose-Rohmaterials 70 bis 95 Gew.-% beträgt und die Reißfestigkeit der Cellulosebahn erhalten bleibt.

Die Weiterbildung des Verfahrens ergibt sich aus den Ansprüchen 2 bis 4.

Die erfindungsgemäße Vorrichtung zur Durchführung des Verfahrens ist gekennzeichnet durch eine Befeuchtungseinheit, ein Mahlwerk, eine erste Fördereinrichtung, die das Cellulose-Rohmaterial der Befeuchtungseinheit zuführt, eine zweite Fördereinrichtung, die das befeuchtete Cellulose-Rohmaterial von der Befeuchtungseinheit in das Mahlwerk transportiert und eine Siebeinheit, wobei die erste und zweite Fördereinrichtung jeweils aus einer oder mehreren Walzen bestehen und eine oder mehrere der Walzen mit einem regelbaren Antrieb verbunden sind.

Die weitere Ausgestaltung der Vorrichtung ergibt sich aus den Ansprüchen 6 bis 9.

Die nach dem Verfahren gemahlene Cellulose besitzt eine Grenzviskositätszahl GVZ von 90 bis 97 % der Grenzviskositätszahl der nicht gemahlenen Cellulose.

Mit der Erfindung werden die Vorteile erzielt, dass die zu mahlende Cellulose thermischmechanisch nur gering beansprucht wird, so dass der Polymerisationsgrad DP nur in kleinem Ausmaß reduziert wird und dass die Mahlvorrichtung ausreichend gekühlt wird, wobei die Kondensation der Befeuchtungsflüssigkeit in der Mahlvorrichtung weitgehend vermieden wird.

Im folgenden wird die Erfindung anhand von zeichnerisch dargestellten Ausführungsbeispielen näher erläutert. Es zeigen
- Fig. 1: ein Blockdiagramm einer Vorrichtung nach der Erfindung;
- Fig. 2: eine schematische Schnittdarstellung einer Walzen-Befeuchtungseinheit der Vorrichtung nach Fig. 1;
- Fig. 3: eine schematische Schnittdarstellung einer Düsen-Befeuchtungseinheit der Vorrichtung nach Fig. 1; und
- Figuren 4 - 6: Diagramme betreffend den Zusammenhang zwischen aufgebrachter Wassermenge und Grenzviskositätszahl GVZ jeweils in Abhängigkeit von der Walzendrehzahl.

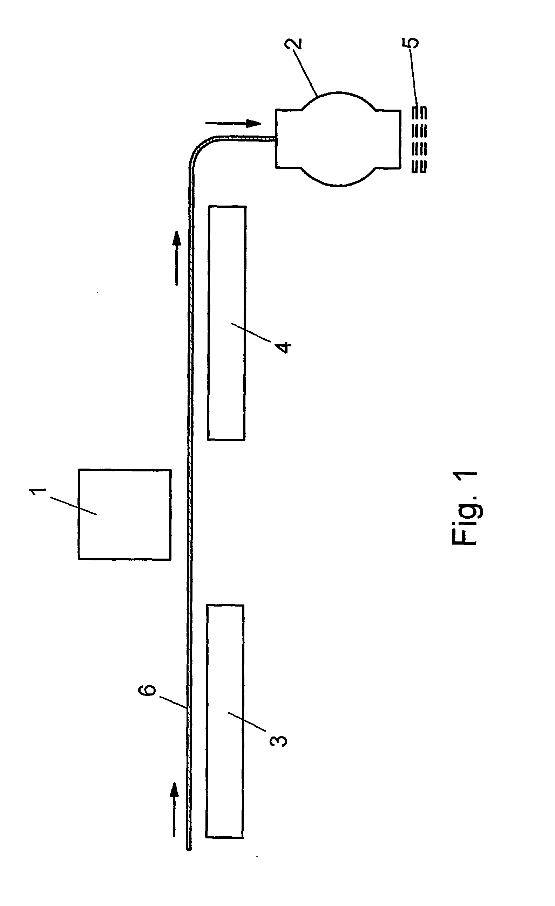

Wie Fig. 1 zeigt, wird Cellulose-Rohmaterial 6, das in Bahnform oder als Stück- oder Schüttgut vorliegt, mittels einer Fördereinrichtung 3 zu einer Befeuchtungseinheit 1 transportiert und dort mit einer Flüssigkeit beaufschlagt. Das befeuchtete Cellulose-Rohmaterial wird von einer zweiten Fördereinrichtung 4 weiter zu einem Mahlwerk 2 transportiert. In dem Mahlwerk 2 wird die Cellulosebahn mechanisch zerkleinert, wobei die durch den Mahlvorgang erzeugte Wärmeenergie teilweise mittels Verdampfungskühlung - in Fig. 1 nicht dargestellt - abgeführt wird. Durch den Mahlvorgang werden vor allem die in der Cellulosebahn vorhandenen Fasern freigesetzt, wobei sie ihre ursprüngliche Faserlänge im wesentlichen beibehalten, was bedeutet, dass die Fasern nicht gehäkselt werden. Durch eine Siebeinheit 5 wird aus dem Cellulose-Mahlgut eine gewünschte Faserlängenverteilung von kleiner 700 µm ausgesiebt.

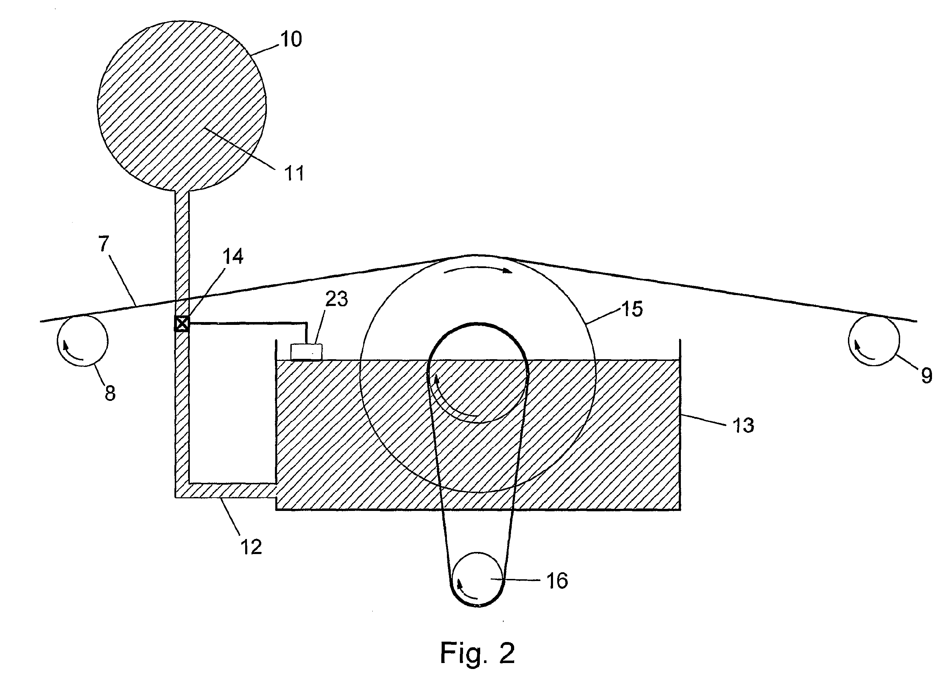

In Fig. 2 ist eine erste Ausführungsform einer Walzen-Befeuchtungseinheit für Cellulose-Rohmaterial 6, das als Cellulosebahn 7 vorliegt, schematisch dargestellt. Eine Befeuchtungsflüssigkeit 11 wird mittels einer angetriebenen Befeuchtungswalze 15 aus einer Wanne 13 auf die Cellulosebahn 7 übertragen. Die Befeuchtungswalze 15 ist quer zur Cellulosebahn 7 ausgerichtet und sie berührt die Cellulosebahn entlang einer zu ihrer Längsachse parallelen Mantellinie. 30 bis 80 % der Mantelfläche der Befeuchtungswalze sind in die Befeuchtungsflüssigkeit 11 eingetaucht. Die Drehgeschwindigkeit der Befeuchtungswalze 15 wird durch einen Antrieb 16 gesteuert. In Abhängigkeit von der Drehzahl der Befeuchtungswalze 15 wird mehr oder weniger Flüssigkeitsmenge pro Zeiteinheit auf dem Mantelumfang der Befeuchtungswalze 15 als Flüssigkeitsfilm mitgeführt und der Flüssigkeitsfilm auf die Cellulosebahn 7 aufgedruckt bzw. abgeklatscht. Aus einem Vorratsbehälter 10, der über eine Leitung 12 mit der Wanne 13 verbunden ist, fließt Befeuchtungsflüssigkeit 11 in die Wanne 13 nach. Die Zuflussmenge wird durch die Öffnung eines Ventils 14 gesteuert, das mit einem Fühler (z.B. ein Schwimmer) verbunden ist, der den Flüssigkeitspegel in der Wanne 13 laufend misst. Fällt der Flüssigkeitspegel wird das Ventil geöffnet. Umgekehrt wird das Ventil geschlossen, wenn der Flüssigkeitspegel eine vorgegebene Sollhöhe erreicht oder übersteigt. Hierdurch wird der Flüssigkeitspegel in der Wanne 13 auf der Sollhöhe gehalten, so dass die übertragene Flüssigkeitsmenge in Abhängigkeit von der Drehgeschwindigkeit der Befeuchtungswalze 15 gesteuert wird.

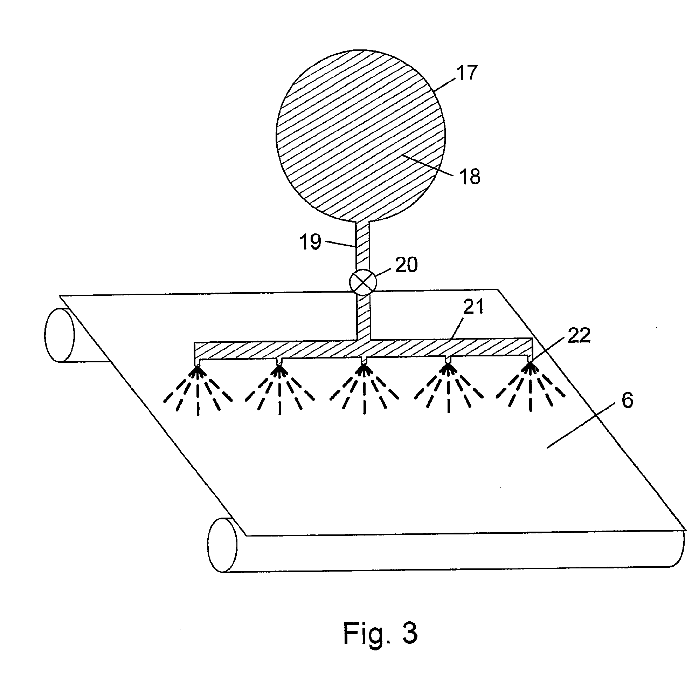

Fig. 3 zeigt eine zweite Ausführungsform der Befeuchtungseinheit 1. Mehrere Düsen 22 sind äquidistant zueinander in einer Verteilerleitung 21 angeordnet. Die Verteilerleitung 21 ist senkrecht zur Förderrichtung des Cellulose-Rohmaterials 6 ausgerichtet. Durch die Düsen 22 wird die Befeuchtungsflüssigkeit 18 auf das Cellulose-Rohmaterial aufgesprüht. Die Verteilerleitung 21 ist durch eine Hauptleitung 19 mit einem Vorratsbehälter 17 verbunden. Den Zufluss vom Vorratsbehälter 17 in die Verteilerleitung 21 und die Düsen 22 regelt ein Ventil 20 in der Hauptleitung 19, d.h. die Flüssigkeitsmenge, mit der das Cellulose-Rohmaterial befeuchtet wird, kann gezielt eingestellt werden. Als Befeuchtungsflüssigkeit kommt, ebenso wie bei der ersten Ausführungsform, in erster Linie Wasser in Betracht.

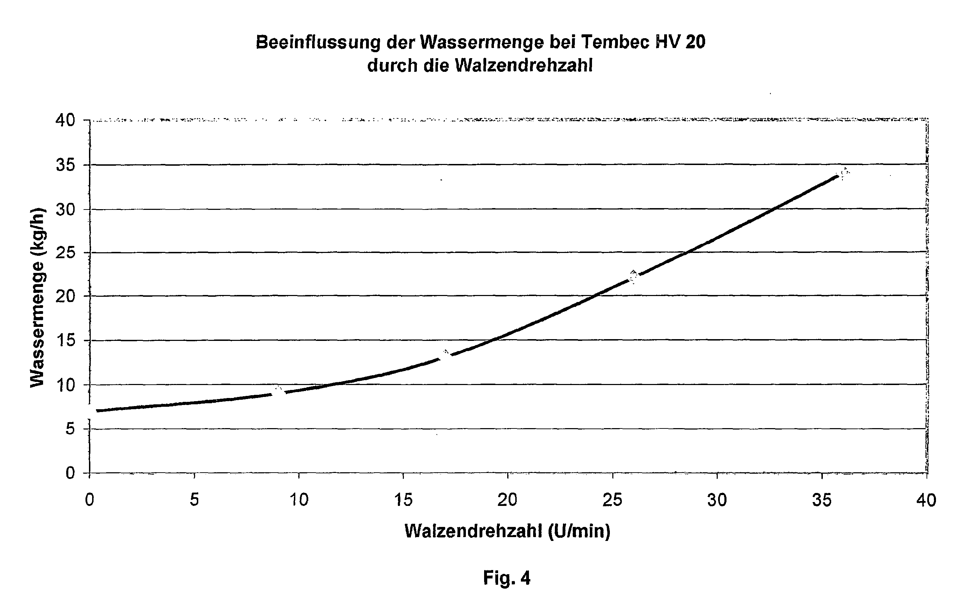

Fig. 4 zeigt den Zusammenhang zwischen Walzendrehzahl und übertragener Wassermenge am Beispiel einer Cellulosebahn aus dem Zellstoff Tembec HV 20. Über die Walzendrehzahl wird die übertragene Flüssigkeitsmenge eingestellt. Dabei wird die Flüssigkeitsmenge so weit begrenzt, dass die Cellulosebahn nicht reißt. Wird nämlich zu viel Flüssigkeit zugeführt, wird die Reißfestigkeit der Cellulosebahn nicht beibehalten, d.h. sie wird so stark vermindert, dass die Cellulosebahn abreißt.

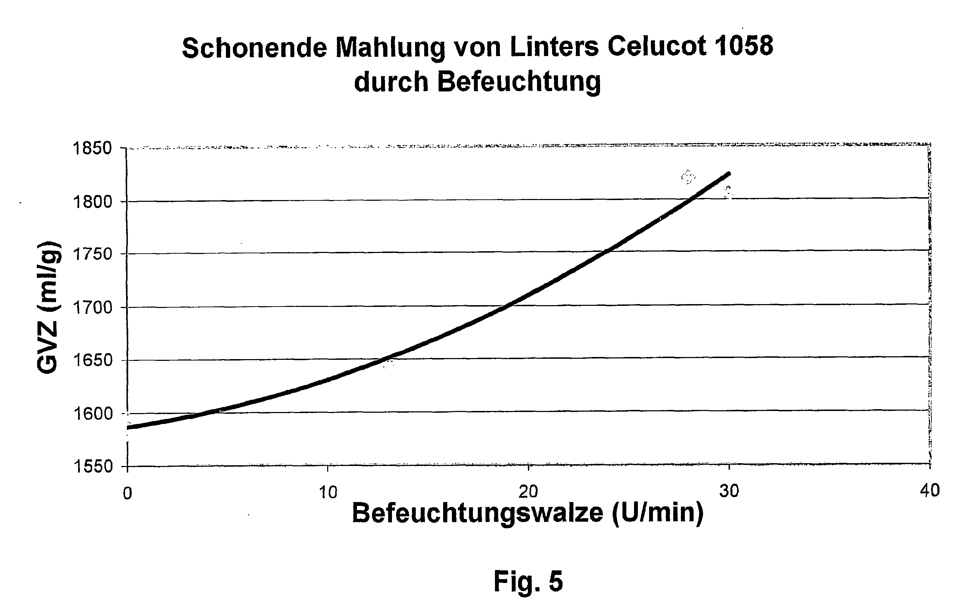

In Fig. 5 ist die Grenzviskositätszahl GVZ am Beispiel gemahlenen Linters des Typs "Celucot 1058" als Funktion der vor dem Mahlvorgang zugeführten Wassermenge bzw. Drehgeschwindigkeit der Befeuchtungswalze dargestellt. Für den nativen - geringfügig feucht angelieferten - Linters Celucot 1058 wurde vor dem Mahlvorgang eine Grenzviskositätszahl GVZ von 2003 ml/g gemessen. Durch konventionelle Trockenmahlung (Walzendrehzahl = 0) wurde die Grenzviskositätszahl GVZ auf unter 1600 ml/g reduziert. Demgegenüber konnte bei hoher Wasserzufuhr (30 U/min) eine Grenzviskositätszahl GVZ von 1800 ml/g erzielt, d.h. die Reduzierung der Grenzviskositätszahl GVZ durch das Mahlen stark gebremst werden.

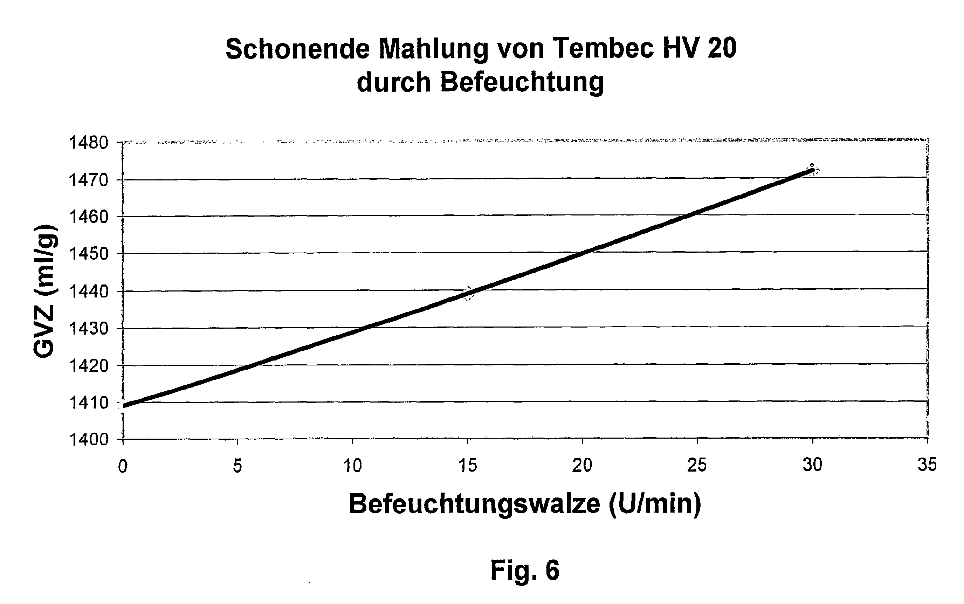

Fig. 6 zeigt - analog zu Fig. 5 - die Grenzviskositätszahl GVZ von erfindungsgemäß gemahlener Tembec HV 20 Cellulose als Funktion der vor dem Mahlvorgang zugeführten Wassermenge bzw. Drehgeschwindigkeit der Befeuchtungswalze. Die GVZ des nativen Tembec HV 20 betrug 1518 ml/g. Durch konventionelle Trockenmahlung wurde die GVZ auf 1410 ml/g reduziert. Dieser Wert ist zu vergleichen mit 1473 ml/g bei hoher Wasserzufuhr (30 U/min) und zeigt gleichfalls einen stark reduzierten Grenzviskositätsabbau der Cellulose.

Voranstehend wurden zwei Methoden zur Befeuchtung von Cellulose-Rohmaterial beschrieben, nämlich die Aufdüsung von Flüssigkeit auf das vorbeilaufende Cellulose-Rohmaterial und die "Bedruckung" einer Cellulosebahn mit Wasser mit Hilfe einer Befeuchtungswalze. Dabei ist stets zu beachten, dass die Zugfestigkeit der Cellulosebahn erhalten bleiben muss, da nur dann die Zuführung in die Mühle und das Mahlen, insbesondere das Schneiden der Bahn in einer Messermühle problemlos gewährleistet ist.

In Vorversuchen konnte ermittelt werden, dass die Reißfestigkeit von Cellulosebahn abhängig ist von der Einwirkzeit des Wassers und von der Wassermenge. Einwirkzeiten von deutlich über 20 Sekunden führen zu homogener Verteilung der Feuchtigkeit über die Dicke der Bahn und somit zu verringerter Reißfestigkeit. Ein Feuchtigkeitsgehalt von mehr als 30 % führt ebenfalls zu nennenswertem Stabilitätsverlust. Auch eine inhomogene Befeuchtung über die Breite der Bahn ist zu vermeiden, da es sonst zu Abrissen kommen kann. Es muss also eine Methode entwickelt werden, bei der etwa 5 bis 301 1 Wasser pro Stunde auf die Cellulosebahn, die eine Breite von 70 bis 80 cm hat, schnell und homogen aufgebracht werden können. Die homogene Aufdüsung im Kubikzentimetermaßstab pro Sekunde über die Breite der Cellulosebahn erfordert einen höheren apparativen Aufwand als die "Bedruckung" .

Die erfindungsgemäße Vorrichtung wird zweckmäßigerweise zwischen einen Rollenabwickler und die Celluloseeinzugswalzen einer Messermühle gesetzt. Die Vorrichtung besteht aus der mit einem Regelgetriebe angetriebenen verchromten Befeuchtungswalze, deren Mantelfläche zu etwa 30 bis 80 % in Wasser eintaucht. Um eine korrekte Führung der Cellulosebahn zu gewährleisten, wird die Bahn zusätzlich über je eine Ein- und Austrittsführungswalze geleitet, die nicht gezeigt sind. Der Wasserstand in der Wanne wird mittels Schwimmer automatisch konstant gehalten.

Die Cellulosebahn wird durch die Führungswalzen gezielt auf die Befeuchtungswalze gepresst. Durch Änderung der Drehzahl der Befeuchtungswalze kann der Trockengehalt der Cellulosebahn aus Tembec HV 20 zwischen 95 % (Drehzahl 0 = Originalfeuchte der angelieferten Cellulose) und 81 % (Drehzahl 30 U/min) verläßlich verändert werden. Die Einzugsgeschwindigkeit der Cellulosebahn im hier beschriebenen Beispiel liegt im Bereich 3,2 bis 3,6 m/min, insbesondere beträgt sie 3,4 m/min. Es sind aber, abhängig von der technischen Ausrüstung der Mühle, auch andere Einzugsgeschwindigkeiten fahrbar, wobei die zu übertragende Wassermenge, d. h. die Umdrehungszahlen der Walze, entsprechend so anzupassen sind, dass die gewünschte Feuchte der Bahn erhalten wird.

Bei Linters sind bei gleicher Drehzahl der Befeuchtungswalze 107,8 % der Wassermenge für Tembec HV 20 zur Verfügung zu stellen, da die Bahnen im hier beschriebenen Beispiel statt 70 cm 75,5 cm breit sind.

Es wurden fünf Lintersmahlungen mit Befeuchtung durchgeführt. Die Mühle war eine Schneidmühle mit offenem Rotor und acht Messern sowie einem 0,3 mm Sieb.

Die Mühle wurde etwa eine halbe Stunde durch trockenes Mahlen bei 3,4 m/min Bahngeschwindigkeit angewärmt, dann wurde durch Anstellen der Befeuchtungswalze eine vorgegebene Wassennenge auf die Bahn aufgebracht. Nach zwei Stunden war das Temperaturgleichgewicht gegeben. Zu diesem Zeitpunkt wurde in der entsprechenden Ausgangs-Pneumatikleitung eine Zellstoffprobe genommen.

Der Verlauf der Temperatur in der Pneumatikleitung wurde aufgezeichnet, um den Zeitpunkt der Gleichgewichtseinstellung festzustellen. Die Feuchtigkeit des gemahlenen Zellstoffs sowie die Grenzviskosität GVZ wurden ermittelt.

Fig. 5 zeigt deutlich, dass bei zunehmender Drehzahl der Befeuchtungswalze, d. h. bei zunehmender Feuchtigkeit der Cellulosebahn, die Grenzviskosität GVZ ansteigt. Die ursprüngliche Cellulose hatte eine Grenzviskositätszahl GVZ von 2003 ml/g. Durch Befeuchtung lässt sich der Abbau der GVZ von 1590 ml/g (Walzendrehzahl = 0) bis auf 181 0 ml/g bei einer Walzendrehzahl von 30 pro Minute reduzieren. Bei dieser Drehzahl wird ein Trockengehalt der Cellulosebahn von 83,5 % erreicht. Die Temperatur der austretenden Kühlluft reduziert sich von 100 °C auf unter 70 °C. Der Trockengehalt des gemahlenen Linters liegt bei 96,4 %, während ohne Befeuchtung 97,8 % gemessen wurden.

Vergleichbare Mahlungen wurden mit Tembec HV 20 gefahren. Die Ergebnisse zeigen die gleiche Tendenz wie bei Linters. Durch Befeuchtung lässt sich der Abbau beim Mahlen des Zellstoffs verringern. Die Effekte sind hier jedoch deutlich geringer, wie der Fig. 6 zu entnehmen ist. Dies ist hauptsächlich darauf zurückzuführen, dass Nadelholzzellstoff sich signifikant einfacher mahlen lässt als Linters bei gleichen Mahlbedingungen. Ohne Befeuchtung erreichen die Temperaturen der Kühlluft hier statt 100 °C maximal 85 °C. Mit Befeuchtung werden wieder etwa 60 °C in der Kühlluft erreicht. Aus diesem Grund ist die Reduzierung des GVZ-Abbaus nicht so ausgeprägt wie bei Linters. Bei einer GVZ von 1518 ml/g der Anfangscellulose wird bei einer Einzugsgeschwindigkeit von 3,4 m/min ein Abbau auf 1410 ml/g gemessen. Die Reduzierung des GVZ-Abbaus kann folglich nicht so ausgeprägt wie bei Linters sein. Immerhin wird bei maximaler Befeuchtung eine GVZ von 1473 ml/g gemessen. Das zugegebene Wasser verdampft im Mühlenraurn und feuchtet die warme Abluft an. Es wurde eine rechnerische Abschätzung unternommen, ob es durch Taupunlctunterschreitung im Zellstoffzyldon zu Kondensation kommen kann, die an sich unerwünscht ist.

Folgende Ausgangsdaten wurden den Berechnungen zugrunde gelegt: Die Cellulose wird bei der Befeuchtung in ihrem Trockengehalt von 95 Gew.-% auf 81,5 Gew.-% (bezogen auf das Gesamtgewicht der Cellulose) reduziert. In der gemahlenen Cellulose wird ein Trockengehalt von 96,4 Gew.-% gemessen. Es werden ca. 28 kg Wasser pro Stunde zur Verdampfung zur Verfügung gestellt. Der Ventilator zieht 7200 m³/h Luft von ca. 20 °C und 70 % Luftfeuchte durch drei Mühlen, so dass auf eine Mühle 2400 m³/h Luft entfallen. 2400 m³ Luft von 20 °C können mit 42,7 kg Wasser beladen werden. 2400 m³ Luft von 39 °C können mit 115,5 kg Wasser beladen werden, so dass 72,8 kg Wasser getrocknet werden können, selbst dann wenn die Ansaugluft mit 100 % Luftfeuchtigkeit beladen wäre. Eine Kondensation an der Zyldonwand würde bei Temperaturen unter 28 °C auftreten. Solange die Temperaturen an der Zyldonwand höher als 28 °C sind, kommt es nicht zu einer Kondensation.

Zusammenfassend kann festgestellt werden, dass sowohl bei Linters Celucot 1058, als auch bei dem Nadelholzzellstoff Tembec HV 20, abhängig von der zugegebenen Wassermenge, eine deutliche Reduzierung der Mühlenkühllufttemperatur gemessen wird. Gleichzeitig lässt sich eine im gleichen Maße ansteigende Grenzviskositätszahl GVZ messen. Bei Linters sind diese Effekte besonders ausgeprägt. Während nach der konventionellen Mahlmethode ohne Befeuchtung nur 79 % der Ausgangsgrenzviskositätszahl erhalten bleiben, lässt sich durch Wasserzusatz dieser Wert auf 90 % steigern. Probleme bezüglich der Taupunktunterschreitung im Zellstoffzyklon treten nicht auf, wenn die Wandtemperatur des Zyklons über 35 °C liegt.

## Patentansprüche

1. Verfahren zum Mahlen von Cellulose, bei dem ein Cellulose-Rohmaterial vor dem Vermahlen gleichmäßig mit einer vorgegebenen Flüssigkeitsmenge befeuchtet wird, **dadurch gekennzeichnet, dass** das Cellulose-Rohmaterial als Cellulosebahn einem Mahlwerk kontinuierlich und mit regelbarer konstanter Geschwindigkeit zugeführt wird und dass die Flüssigkeitsmenge so bemessen ist, dass der Trockengehalt des befeuchteten Cellulose-Rohmaterials 70 bis 95 Gew.-% beträgt und die Reißfestigkeit der Cellulosebahn erhalten bleibt.

2. Verfahren nach Anspruch 1, **dadurch gekennzeichnet, dass** das Mahlen der Cellulose durch Schneiden erfolgt und dass die Cellulose während des Mahlens durch einen Gasstrom gekühlt wird.

3. Verfahren nach Anspruch 1 oder 2, **dadurch gekennzeichnet, dass** die Flüssigkeit zum Befeuchten des Cellulose-Rohmaterials Wasser ist, das während des Mahlens verdunstet und die Cellulose kühlt.

4. Verfahren nach Anspruch 2, **dadurch gekennzeichnet, dass** die gemahlene Cellulose eine Grenzviskositätszahl GVZ von 90 bis 97 % der Grenzviskositätszahl der nicht gemahlenen Cellulose hat.

5. Vorrichtung zur Durchführung des Verfahrens nach den Ansprüchen 1 bis 4, **gekennzeichnet durch** eine Befeuchtungseinheit (1), ein Mahlwerk (2), eine erste Fördereinrichtung (3), die das Cellulose-Rohmaterial (6) der Befeuchtungseinheit zuführt, eine zweite Fördereinrichtung (4), die das befeuchtete Cellulose-Rohmaterial von der Befeuchtungseinheit (1) in das Mahlwerk transportiert und eine Siebeinheit (5), wobei die erste und zweite Fördereinrichtung jeweils aus einer oder mehreren Walzen (8) und (9) bestehen und eine oder mehrere der Walzen mit einem regelbaren Antrieb verbunden sind.

6. Vorrichtung nach Anspruch 5, **gekennzeichnet durch** die Befeuchtungseinheit, bestehend aus:
(a) einem Vorratsbehälter (10) für die Flüssigkeit (11), mit der die Cellulosebahn befeuchtet wird,
(b) einer Wanne (13), die mit dem Vorratsbehälter über eine Leitung (12) verbunden ist,
(c) einem mittels Füllstandmesser (23) geregelten Ventil (14), das den Zufluss der Flüssigkeit in die Wanne steuert und den Flüssigkeitspegel auf eine bestimmte konstante Höhe einstellt,
(d) einer angetriebenen Befeuchtungswalze (15), deren Länge größer oder gleich der Breite der zu mahlenden Cellulosebahn ist und die quer zur Cellulosebahn ausgerichtet ist, wobei 30 bis 80 % der Mantelfläche der Walze in die Flüssigkeit eintauchen, und die Befeuchtungswalze an ihrer Oberseite entlang einer Linie parallel zu ihrer Längsachse die Cellulosebahn berührt und befeuchtet, und
(e) einem Antrieb (16), mit dem die Drehzahl der Befeuchtungswalze und somit die auf die Cellulosebahn übertragene Flüssigkeitsmenge einstellbar sind.

7. Vorrichtung nach Anspruch 5, **gekennzeichnet durch**:
(a) einen Vorratsbehälter (17) mit einer Flüssigkeit (18) zum Befeuchten des Cellulose-Rohmaterials,
(b) eine Hauptleitung (19), die mit dem Vorratsbehälter verbunden ist,
(c) ein regelbares Ventil (20) in der Hauptleitung zur Einstellung des Flüssigkeitsstromes, und
(d) eine oder mehrere in einer Verteilerleitung (21) angeordnete Düsen (22), wobei die Verteilerleitung an die Hauptleitung (19) angeschlossen ist.

8. Vorrichtung nach Anspruch 5, **dadurch gekennzeichnet, dass** das Mahlwerk (2) eine Messermühle ist.

9. Vorrichtung nach Anspruch 5, **dadurch gekennzeichnet, dass** die Siebeinheit (5) an der Ausgangsseite des Mahlwerks (2) angeordnet ist.

## Claims

1. A process for the grinding of cellulose in which a raw cellulose material is uniformly moistened with a prescribed amount of liquid before the grinding operation wherein the raw cellulose material in the form of a cellulose web is fed continuously at a controllable constant speed to a grinding unit and the amount of liquid is so measured that the dry weight content of the moistened raw cellulose material amounts to 70 to 95 % by weight and that the tensile strength of the cellulose web is retained.

2. The process as claimed in claim 1, wherein the grinding of the cellulose is obtained by cutting and the cellulose is cooled by a stream of gas during the grinding operation.

3. The process as claimed in claim 1 or claim 2, wherein the liquid for moistening the raw cellulose material is water which evaporates during the grinding and cools the cellulose.

4. The process as claimed in claim 2, wherein the ground cellulose has a limiting viscosity number LVN of 90 to 97 % of the value of the limiting viscosity number of the unground cellulose.

5. A device for carrying out the process as claimed in claims 1 to 4, which comprises a moistening unit (1), a grinding unit (2), a first conveying mechanism (3) which conveys the raw cellulose material (6) to the moistening unit, a second conveying mechanism (4) which conveys the moistened raw cellulose material from the moistening unit (1) to the grinding unit and a sieve unit (5) where each of the first and second conveying mechanisms comprise one or more rolls (8) and (9) and one or more of the rolls is/are connected to a controllable drive.

6. The device as claimed in claim 5, which comprises the moistening unit which consists of:
(a) a storage vessel (10) for the liquid (11) with which the cellulose web is moistened,
(b) a bath (13) which is connected to the storage vessel by a pipe (12),
(c) a valve (14) controlled by a level device (23) which controls the flow of the liquid into the bath and which maintains the level of liquid at a particular constant height,
(d) a driven moistening roll (15) the length of which is equal to or longer than the width of the cellulose web to be ground and which is aligned across the cellulose web, where 30 to 80 % of the cylindrical surface of the roll is submerged in the liquid and where the upper part of the moistening roll contacts and moistens the cellulose web along a line parallel to its longitudinal axis, and
(e) a drive (16) by means of which the rotational speed of the moistening roll and also at the same time the amount of liquid transferred to the cellulose web can be controlled.

7. The device as claimed in claim 5, which comprises:
(a) a storage vessel (17) with a liquid (18) for moistening the cellulose raw material,
(b) a main pipe (19) which is connected to the storage vessel,
(c) a controllable valve (20) in the main pipe to adjust the flow of the liquid, and
(d) one or more nozzles (22) arranged in a distribution pipe (21) where the distribution pipe is connected to the main pipe (19).

8. The device as claimed in claim 5, wherein the grinding unit (2) is a knife mill.

9. The device as claimed in claim 5, wherein the sieve unit (5) is arranged at the discharge side of the grinding unit (2).

## Revendications

1. Procédé pour la mouture de cellulose, dans lequel une matière brute de cellulose est humidifiée avant la mouture de manière homogène avec une quantité prédéfinie de liquide, **caractérisé en ce que** la matière brute de cellulose est délivrée de manière continue et à une vitesse constante réglable sous la forme d'une bande de cellulose à un broyeur, et **en ce que** la quantité de liquide est mesurée de telle sorte que la teneur en matière sèche de la matière brute de cellulose humidifiée est de 70 à 95 % en poids, et la résistance à la déchirure de la bande de cellulose est préservée.

2. Procédé selon la revendication 1, **caractérisé en ce que** la mouture de la cellulose est réalisée par voie de découpe et **en ce que** la cellulose est refroidie pendant la mouture au moyen d'un flux gazeux.

3. Procédé selon la revendication 1 ou 2, **caractérisé en ce que** le liquide permettant d'humidifier la matière brute de cellulose est de l'eau, qui s'évapore pendant la mouture et refroidit la cellulose.

4. Procédé selon la revendication 2, **caractérisé en ce que** la cellulose moulue présente un degré de viscosité limite GVZ représentant 90 à 97 % du degré de viscosité limite de la cellulose non moulue.

5. Dispositif adapté pour la mise en oeuvre du procédé selon l'une quelconque des revendications 1 à 4, **caractérisé par** une unité humidificatrice (1), un broyeur (2), un premier dispositif de transport (3), qui achemine la matière brute de cellulose (6) vers l'unité humidificatrice, un deuxième dispositif de transport (4), qui transporte la matière brute de cellulose humidifiée de l'unité humidificatrice (1) au broyeur et une unité de tamisage (5), les premier et deuxième dispositifs de transport étant respectivement constitués d'un ou plusieurs rouleaux (8) et (9), et le un ou plusieurs rouleaux sont reliés à un entraînement réglable.

6. Dispositif selon la revendication 5, **caractérisé en ce que** l'unité humidificatrice est composée des éléments suivants :
(a) un réservoir (10) destiné au liquide (11) permettant d'humidifier la bande de cellulose,
(b) une cuve (13), qui est reliée au réservoir par l'intermédiaire d'une conduite (12),
(c) une soupape (14) réglée à l'aide d'un dispositif de mesure du niveau de remplissage (23), laquelle soupape commande l'arrivée de liquide dans la cuve et règle le niveau de liquide à une hauteur constante déterminée,
(d) un rouleau humidificateur mené (15), dont la longueur est supérieure ou égale à la largeur de la bande de cellulose à moudre, et qui est orienté transversalement par rapport à la bande de cellulose, 30 à 80 % de la surface d'enveloppe du rouleau étant introduit dans le liquide, et le rouleau humidificateur entre en contact avec la bande de cellulose et humidifie celle-ci au niveau de sa face supérieure le long d'une ligne parallèle à son axe longitudinal, et
(e) un entraînement (16), grâce auquel la vitesse de rotation du rouleau humidificateur et donc la quantité de liquide transférée sur la bande de cellulose peuvent être réglées.

7. Dispositif selon la revendication 5, **caractérisé par** :
(a) un réservoir (17) contenant un liquide (18) permettant d'humidifier la matière brute de cellulose,
(b) une conduite principale (19), qui est reliée au réservoir,
(c) une soupape réglable (20) dans la conduite principale, permettant de régler le flux de liquide, et
(d) une ou plusieurs buses (22) disposées dans une conduite de distribution (21), la conduite de distribution étant reliée à la conduite principale (19).

8. Dispositif selon la revendication 5, **caractérisé en ce que** le broyeur (2) est un broyeur à couteau.

9. Dispositif selon la revendication 5, **caractérisé en ce que** l'unité de tamisage (5) est disposée du côté sortie du broyeur (2).
